# EUROPEAN PATENT APPLICATION

(11) **EP 1 469 412 A2**
(43) Date of publication of application: **20.10.2004**
(21) Application number: 04397007.8
(22) Date of filing: 15.04.2004
(51) Int. Cl.: G06F 17/60

(54) **A method and a system for controlling debiting data**

(30) Priority: 16.04.2003 FI 20030584
(71) Applicant: TeliaSonera Finland Oyj, 00510 Helsinki (FI)
(72) Inventor: Heikka, Markku, 90540, Oulu (FI); Immonen, Marko, 90800, Oulu (FI); Juntunen, Ari, 90520, Oulu (FI); Kairamo, Juha, 90910, Kontio (FI); Kakko, Kimmo, 90800, Oulu (FI)
(74) Representative: Pursiainen, Timo Pekka

(57) **Abstract**

The invention relates to a method for controlling debiting data, in which method a service comprising image, voice or text, or a combination of these, is transferred over a data transfer network to a receiving terminal, which is debited for the service transfer. The control concerns the handling of the internal debiting data of a terminal in such a manner that the service used is identified and the price of the service is calculated in the terminal, in which case the debiting data is transferred from the terminal to the invoicer. In addition, the invention relates to a system, which is arranged to fetch debiting data from the receiving terminal.

## Description

The present invention relates to a method for controlling debiting data described in the preamble of the independent claim 1, in which method a service is transferred over a data transfer network to a receiver, in which case the receiver is debited for the service transfer. In addition, the invention relates to a system for controlling debiting data described in the preamble of claim 16.

It is typical to transfer services from a service provider to a terminal via wireless networks, such as mobile communication networks (GSM, GPRS, UMTS, EDGE, etc.) or local area networks (WLAN, 802.11, 802.1 x), which terminal is advantageously a mobile communication device or a corresponding mobile terminal. The terminal has a customer connection (subscription) with a specific wireless network for using the services. Correspondingly, the service provider can also have a customer connection with a certain network provider, but the service provider can also be owned by the network provider. Such electronic services, which belong to the network provider, and whose customer and debiting connection is with the network provider, are, among others, the substantially fixed-price services of the network provider, such as voice, text messages, multimedia messages, as well as other variable-priced services of an external content provider. Independent service providers and content providers can take care of debiting for their own service, as well as the debiting control. It is, however, usual that the debiting of independent services also takes place through the network provider.

Conventionally the user of a terminal is debited for using services by a so-called postpaid method, which is performed after certain debiting periods. Thus, the event information affecting debiting is collected from the different network elements used in transferring a service, such as, for example, the duration of the service and the amount of transferred data. This event information originating from different sources are transmitted forward to the debiting systems of the network provider for editing and combining. When a packet to be debited is gathered from the event information, it is transmitted to a pricing system, as well as to a system that writes the debit note. The financial standing of the user is controlled and monitored by means of unpaid debit notes, in which case too many non-payments can lead to a subscription being cancelled.

If the user wants to control the debiting amount of his/her subscripti on, he/she can set balance counters for the subscription, which block the use of the subscription after the balance limit is exceeded. The user sets an upper limit, which the price of services debited monthly cannot exceed. If the limit is exceeded, it is not possible to make a connection from the user's subscription during the same debiting period unless the balance limit is raised. Changing and setting the balance limit takes place, for example, by means of text messages or by ordering a balance service from the customer service of a network provider. It is possible for the user to monitor the debiting and the balance limit by means of received text messages, which are automatically sent when a certain portion of the balance available for use has been used. In addition, the user is informed when the call barring is switched on and off again. Despite the agreed balance limit, the end balance debited for using the subscription does not necessarily always correspond to what was agreed. This is because the call barring is switched on with a delay, in which case the actual debited expenses may exceed the balance limit. Updating the balance limit does not take place in real time, but, for example, calls and text messages are updated in the balance monitoring within an hour from the output. Content services used by means of text messages, WAP (Wireless Application Protocol) or the Internet are updated in the balance monitoring with a delay of one day.

Debiting can, in addition, be controlled, for example, by means of a so-called prepaid method, where the user of the terminal pays in advance for the costs of the use of the subscription and services. Debiting is taken care of by means of a control logic constructed into the network elements. The task for this is to identify the user and the service being used, to calculate the price of the service and to check the balance of the user in real time from the account of the prepaid subscription, where the user has paid an advance payment to, as well as to debit the prepaid subscription for the use of the service. It is known that the prepaid account is controlled by a special accounting device in the communication network. When the user uses a service, a payment request is sent to the debiting system. The payment request includes an identifier from the user's terminal as well as the debited amount. The debiting system determines by means of the identifier which accounting device corresponds to the user and sends the debiting request to that.

Similar to conventional debiting, the prepaid debiting is not real time either. The balance is updated with a delay of an hour or a day, depending on the used service. In addition, service debiting strongly relies on the information provided by the network element providing the service. The fact that the service has transferred forward from the network element does not guarantee that the service in question has been received in the terminal. Thus, while debiting it is not possible to be entirely sure that the service has been received, which results in that sometimes erroneous extra debiting may occur for a service.

More and more network elements take part in providing electronic services, which is a result of an increase in provided services as well as changes in the services into more multiformed ones. The debiting information of services leaving the different network elements must be combined, and the combining must take place in real time. This combining is challenging, because the key information needed for combining is not necessarily available for use in these source network elements. In addition, implementation delays the actual use of the service and makes the construction of networks more expensive.

When the content of the electronic services changes, for example, into more IP-based, the content is formed from solely of text, voice or image content into a combination of these content components. Because of this, the amount of event information required for debiting increases massively. Transferring a large piece of debit information between different systems slows down the use of a service and reserves a significant part of the capacity of the network.

As can be seen from the above, the systems according to prior art for using prepaid subscriptions require customized network elements, in which case the communication networks become even more congested. In addition, it is typical to construct separate price databases for subscriptions, to which real time requests are made during the use of the subscription. These price databases are updated by means of the information received from the more general use pricing systems, in which case the network of the network provided is further loaded.

The purpose of the present invention is to present a method for controlling debiting data, which method takes into account the above-mentioned facts in such a manner that the control of the debiting data changes to more simple and reliable than in connection with methods according to prior art. To put it more precisely, the method for controlling debiting data according to the present invention is primarily characterized in that a service debiting data is formed in the method by the receiver in such a manner that the transferred service is identified and the price of the service is calculated. For debiting, said debiting data is transferred from the receiver to the invoicer after a certain period of time. The system according to the invention is mainly characterized in that the system is arranged to obtain possession of the debiting data of a servi ce from the receiver.

The pricing and other basic information of the most common services is installed under the supervision of the operator to the receiver, such as, for example to a wireless terminal. When using the service, only the identity information or the like of the user is transferred in the communication network instead of the debiting data. In the terminal is arranged a logic, which is capable of forming the price of the services and the other information connected to debiting. This debiting data is in the user of the invoicer for debiting, if necessary.

In connection with conventional debiting (post-paid), the invoicer refers advantageously to that network provider with whom the receiver is in a customer connection. The network provider advantageously has access to a system, with which the debiting data is fetched at a required time cycle, after a certain time, from the terminal to the debiting systems of the network provider for the final debiting. It is, in addition, possible that the terminal also sends debiting data to the debiting system of the network provider.

The invention can advantageously be applied also in controlling prepaid subscriptions. Thus, the term invoicer refers to the balance database of the prepaid subscription. which is debited with the amount of the used service ordered by the terminal.

Along with the invention, the need for constructing complex and expensive debiting systems in the network decreases. The increasing efficiency of terminals is utilized effectively, as a result of which there is no need for centralized and heavy pricing systems. By means of the invention, debiting small and inexpensive, the so-called "micro payment" -type events becomes easier. The invention decreases the response times of a service event from the point of view of both the network provider and the user. In addition, by means of the invention, data transfer between the network provider and the user diminishes, because from the point of view of debiting, identifying the user in connection with all service events is not necessarily required.

For the network provider, the present invention creates a possibility to debit for such services that are used directly from the common Internet and which can be reached independent of the network elements of the network provider. Nowadays, in this kind of a situation the network provider cannot debit for transferred contents. When debiting control according to the invention is transferred to the terminal, debiting these services is also possible.

From the point of view of the user of the terminal, the invention improves the reliability of debiting. The user pays only for those services that have recognisably arrived at the terminal. Thus, the services possibly disappeared in the network are not debited. Generally the pricing models and debiting systems are with the development of technology developing as so complex that their implementation in a network with a sufficient efficiency and reliability is very difficult and may even become more expensive than the reached advantages. This threat diminishes by means of the present invention.

Applying the invention in controlling prepaid subscriptions makes it possible to debit small events without significantly loading the network. In addition, terminal-based control removes that delay which may have been created in the systems according to prior art between reaching the balance limit and cancelling the subscription. Since according to the invention balance checking is not necessary to perform in the home network of the terminal, the data transfer between the terminal and the network provider diminishes, which is why terminal roaming in different networks becomes easier.

An advantageous embodiment of the method according to the invention is described more in detail in the appended drawings and the description following them, in which case
- Fig. 1: presents an example of a method according to the invention for controlling debiting data in a terminal,
- Fig. 2: presents an advantageous embodiment of controlling the debiting data according to the invention in connection with prepaid subscriptions, and
- Fig. 3: presents another advantageous embodiment of the method of the invention for controlling the balance data located in the terminal of prepaid subscriptions.

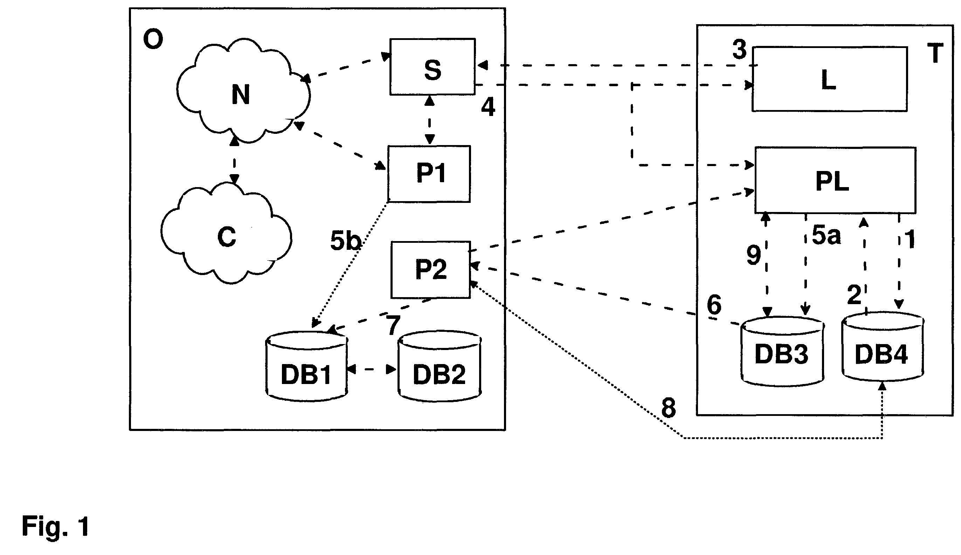

In the following, the basic idea of the method according to the invention is described, which is presented in Fig. 1. The functions of the method are referred to with numbers in the figure. The method according to the invention relates to debiting such services, whose receiver and user is terminal T. This kind of a terminal T is advantageously a wireless mobile communication device or the like, which is arranged to use and receive different services through a communication network, which services are, for example, voice, image or text in an electronic form.

Naturally, the terminal T can also be provided with other functions. The network provider O is arranged to deliver service from a content provider C, which can either be the network provider's own or an external provider.

The terminal T comprises, e.g. in addition to its normal logic L (basic functions of the terminal) debiting logic PL, which comprises counters for measuring the use of services. Measuring the use can concern the duration of phone calls, counting text messages (SMS) or multimedia messages (MMS), or measuring the size of other services, such as IP or other data packets. In addition, the debiting logic comprises counters for measuring the use of other services as well, whose usage can be measured by means of some measurement value (duration, size, etc.). The time data required by the counters and the other corresponding grounds for debiting can be received from some reliable source, such as a communication network as a continuous data monitoring without the user having to fetch it himself/herself (push service).

The terminal T comprises advantageously a debiting database DB3 as well as a price database DB4, to which are stored the prices for the most common services. The price database DB4 can be used when checking the price data in connection with the use of a service by means of a price request (1), for which the debiting logic PL receives as a response a priced service event (2). The debiting logic PL forms debiting data records in a specific form of the gathered event information. As an example of this kind of data records can be mentioned a sum data record, which comprises the event information of a certain time period, as well as an event data record, which comprises only one event data. The number of events comprised by the debiting data records may vary and the debiting data records can be priced or unpriced. The debiting data record is formed of the identification data of a transferred service, such as, for example, the data of a content provider C, the name of the service and the price of the service, which data is separated from the service ordered by the terminal T. In addition, the terminal T is arranged to save the data used in debiting in such a manner that the user of some other unauthorized party cannot change, remove or move it elsewhere.

The network provider O has a system P2 for controlling the debiting data. Said debiting system P2 of the network provider is arranged to operate with the debiting logic PL of the terminal. The system of the network provider O is arranged to install and maintain (8) the price and identification data of the services in the terminal T. The debiting data is received in the system of the network provider O advantageously by means of the debiting system P2 of the network provider O, which debiting system P2 is arranged to fetch debiting data from the debiting database DB3 of the terminal T. The terminal T is for this purpose advantageously provided with a connection system for transmitting (6) debiting data from the debiting database DB3 to the network provider O. Fetching takes place at certain intervals during a certain time. The debiting data can be provided to the network provider O also ordered by the terminal T, in which case the terminal T is arranged to send the debiting data to the debiting system P2 of the network provider O. The system of the network provider O can also be arranged to transfer debiting data from a content provider C to the terminals T in connection with service use. This transfer can also take place past the network elements N of the network provider O, but then the network provider O must have a contract connection with the content provider C. It is advantageous that the content provider C comprises such a system, with which identification and price data is added to the services used.

When a service request (3) is sent from the terminal T, the service logic S of the network provider O delivers (4) the desired service. The debiting data of the service is stored (5a) in the debiting database DB3 of the terminal T, from where it can later be taken out for debiting. Debiting (as well as pricing) can be performed (5b), if necessary, for the part of certain services or service assemblies, according to prior art as well in the data systems of the network provider.

As was stated earlier, the debiting data of the terminal T can be fetched (6) ordered by the debiting system P2 of the network provider for debiting or the debiting data can be sent (6) ordered by the terminal T. The desired debiting data is located in the debiting database DB3, from where it is further updated (7) in the debiting database DB1 of the network provider O. The debiting database DB3 of the terminal T is also in free use of the user for checking debiting requests (9).

Sometimes the network provider O can, in addition, comprise a customer database DB2, where information connected to the terminal is stored, such as user data and resources, such as, for example, the financial standing. Thus, in this database it is possible to store, for example, information for preventing the use of a service, if the user has unpaid invoices.

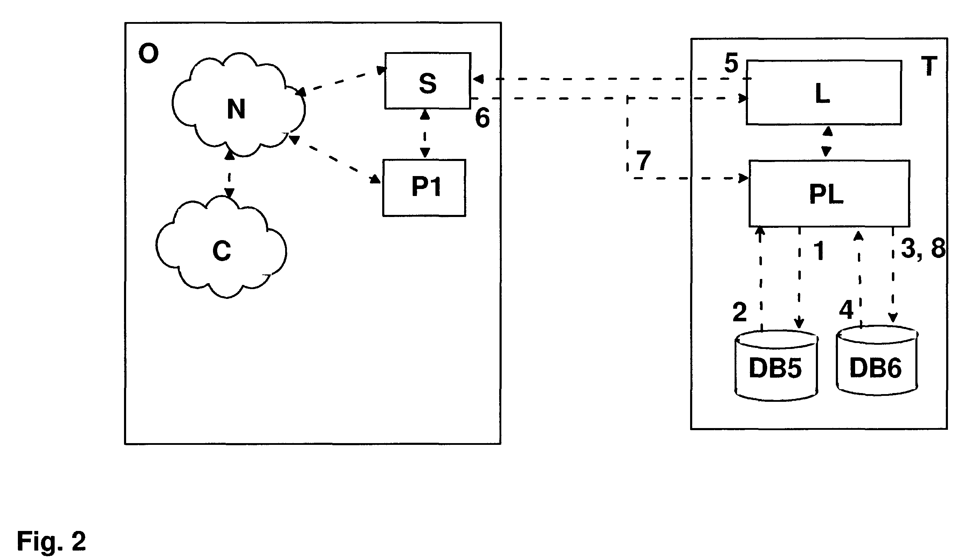

The above-described method can advantageously be applied in connection with prepaid subscriptions. Fig. 2 presents one such embodiment, where the service use of prepaid subscriptions is controlled by means of the terminal T. The prices of the services used are stored in the terminal T, according to which prices the balance of the prepaid subscription is debited. The amount of money in use of the prepaid subscription is located in the balance database DB6 of the terminal T, unlike in the methods according to prior art, where the balance is located in the systems of the network provider. The balance located in the terminal T is continuously updated according to the prices of the services used. The terminal T is arranged to cancel the prepaid subscription after the amount of money available for use has run out.

The price of the service used is located in the service and price database DB5, to which a request (1) is made from the debiting logic PL of the terminal. The service and price database DB5 provides a priced service event as a response (2). This price data is compared (3) to the prepaid balance stored in the terminal T, i.e. the amount of money available for use, which is located in the balance database DB6. If the amount of money available for use, i.e. resources are not enough to cover the price required by the service, the event is interrupted. In other case, the subscription request of the service is accepted (4). After acceptance the normal logic L of the terminal is arranged to perform a service request (5) to the service logic S of the network provider O. As a response to the service request, the network provider O provides the desired service (6). Information on the arrival of a service is updated (7) for the debiting logic PL of the terminal to process and the price of the transferred service is deducted (8) from the balance database DB6. Thanks to the invention, the user always has up-to-date information on the remaining balance of the prepaid subscription. Because updating the balance takes place internally in the terminal, the data transfer network of the network provider is not needed for performing it. Thanks to the invention, balance updating takes place in real time and reliably, because the amount of money available for use is debited only after the service has been received. The unnumbered arrows presented in Fig. 2 describe the normal data transfer used for service transfer between the network elements, which became apparent, for example, in connection with Fig. 1.

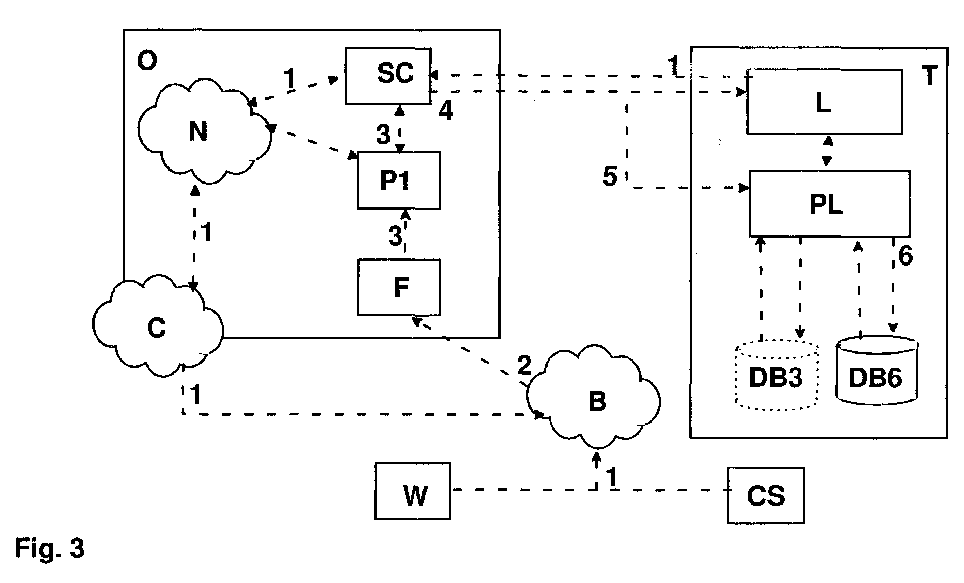

Another advantageous embodiment of the invention is presented in Fig. 3. Here, the terminal-based control according to the invention is applied in maintaining the balance data of prepaid subscriptions. In this embodiment, the data of the balance database DB6 is changed by the network provider O, for example, when adding the amount of money available for use when said balance database DB6 is located in the terminal T and the customer wants to continue the use of a service with the same prepaid subscription. This kind of a situation appears, for example, in an embodiment according to the above (Fig. 2). According to the method, the user of the terminal T adds to the amount of money available for use in the prepaid subscription by using (1), for example, a WWW service W, a service counter of the network provider CS, or a wireless data transfer connection of the terminal, such as, for example, a GPRS connection. It is obvious that the wireless data transfer connection can also be a short-range wireless connection, such as WLAN, Bluetooth, HiperLan or the like, and that the wireless data transfer connection can also be some other mobile phone network connection, such as GSM, UMTS, EDGE or the like. By using each purchase route, the payment for the added amount of money transfers to the payment service B, such as a bank or the like. By using a wireless data transfer connection, the payment event can be implemented with a suitable bank connection, or, for example, by a balance addition service of the network provider implemented for the event in question.

Information on the payment event is provided (2) from the payment service B to the payment monitoring system F of the network provider. The normal debiting system P1 of the network provider O accepts the payment and requests (3) the service and configuration system S to implement a balance update on the terminal T. The update request is transmitted (4) from the service and configuration system S further to the terminal T, which receives (5) the balance update and transfers it further to be processed by its internal debiting system PL. In the same connection, the user can be informed of the arrived balance update. The ordered balance is added (6) after this to the balance database DB6 of the terminal.

The balance of the terminal T can be updated also in other connections than when the user adds to the available amount of money for his/her prepaid subscription. The method according to the invention makes it possible, for example, for an automatic additional balance to be granted, for example, in connection with different campaigns or other corresponding special situations. The balance updates can also be performed automatically in connection with complaints or fault situations.

Different embodiments of the invention have been described above. It is obvious that by combining these it is possible to achieve different embodiments of the invention, which as such are according to the spirit of the invention. Therefore, it is to be noted that the thread of the invention - controlling debiting data in a terminal - can be applied in different payment and debiting situations, in which case the above-described examples are not to be interpreted as limiting the invention. The embodiments of the invention may freely vary within the scope of the inventive features described in the following claims.

## Claims

1. A method for controlling debiting data, in which method a service is transferred over a data transfer network to a receiver (T), in which case a service debiting data is formed by the receiver in such a manner that the transferred service is identified and the price of the service is calculated, after which the receiver is debited for the service transfer, **characterized in that** a debiting data is formed on the basis of the service price data fetched from the price database (DB4) of the receiver (T). which said debiting data is transferred from the receiver to the invoicer after a certain time.

2. The method according to claim 1, **characterized in that** in the method the debiting data is transferred to the internal balance database (prepaid) (DB6) of the receiver (T).

3. The method according to claim 1, **characterized in that** in the method the debiting data is transferred to the debiting database (DB1) of the network provider handling the customer connection of the receiver (T).

4. The method according to claim 3, **characterized in that** the debiting data is fetched from the receiver (T) to the invoicer by the debiting system of the network provider.

5. The method according to any of the claims 1 to 4, **characterized in that** the database (DB1) of the debiter is updated for the part of the debiting data.

6. The method according to any of the preceding claims, **characterized in that** before transferring the service, the balance of the internal balance database (DB6) of the receiver (T) is compared to the price of the service, in which case the service is left untransferred if the price exceeds said balance.

7. The method according to any of the preceding claims, **characterized in that** in the method it is made possible for the receiver (T) to check the price data of the service or the debiting data while using the service.

8. The method according to any of the preceding claims, **characterized in that** in the method the amount of money available for use in the internal balance database (DB6) of the receiver (T) is increased.

9. The method according to any of the preceding claims, **characterized in that** the service use possibility of the receiver (T) is cancelled after the amount of money available for use in the internal balance database (DB6) has run out.

10. The method according to any of the preceding claims, **characterized in that** in the method the internal database (DB6) of the receiver is updated by the updating system (SC) of the network provider handling the customer connection of the receiver.

11. The method according to any of the preceding claims, **characterized in that** in the method the service is transferred to a mobile communication device or the like terminal capable of wireless data transfer.

12. The method according to any of the preceding claims, **characterized in that** in the method image, voice or text or a combination of these is transferred to the receiver over a data transfer network.

13. A system for controlling debiting data, which system comprises a data transfer network for transferring the service to be debited to the receiver (T), as well as means for debiting the receiver (T) for said data transfer, which means are arranged to the receiver (T), **characterized in that** the system, in addition, comprises a price database for forming debiting data, and means for transferring the debiting data to the invoicer.

14. The system according to claim 13, **characterized in that** the invoicer is arranged as an internal balance database (DB6) of the receiver (T).

15. The system according to claim 13, **characterized in that** the invoicer is arranged as the debiting database (DB1) of the network provider handling the customer connection in order to store the debiting data received from the receiver.

16. The system according to claim 13 to 15, **characterized in that** the system is arranged to update at least one database (DB3, DB5, DB6) of the receiver.

17. The system according to any of the claims 14 to 16, **characterized in that** the system is arranged to increase the amount of money available for use in the internal balance database (DB6) of the receiver.

18. The system according to any of the claims 13 to 17, **characterized in that** the system is arranged to update the price database (DB3, DB5) of the receiver for the part of the prices of the transferred services and other corresponding characteristics.

19. The system according to any of the claims 13 to 18, **characterized in** the service transferred over a data transfer network comprises image, voice or text, or a combination of these.
